# EUROPÄISCHE PATENTANMELDUNG

(11) **EP 0 902 206 A1**
(43) Veröffentlichungstag der Anmeldung: **17.03.1999**
(21) Anmeldenummer: 98116145.8
(22) Anmeldetag: 27.08.1998
(51) Int. Cl.: F16D 23/06

(54) **Drehfeste Verbindung eines Kupplungsringes einer Synchronisiereinheit mit einem Zahnrad**

(30) Priorität: 13.09.1997 DE 19740355
(71) Anmelder: Ford Global Technologies, Inc., Dearborn, Michigan 48126 (US)
(72) Erfinder: Ernstmeyer, Joerg Adolf, 50735 Koeln (DE)
(74) Vertreter: Drömer, Hans-Carsten, Dipl.-Ing.

(57) **Zusammenfassung**

Drehfeste Verbindung eines Kupplungsringes einer Synchronisiereinheit mit einem Zahnrad, wobei der Kupplungsring auf einem Absatz des Zahnrades aufgenommen wird und mit am Umfang verteilten Ausnehmungen versehen ist, ist das Zahnrad (4) mit am Umfang verteilten Bohrungen oder Ausnehmungen versehen und der Kupplungsring (8) ist mit am Umfang verteilten Ausnehmungen (27) und Materialstopfen (26) versehen, die durch einen Feinstanzvorgang an den entsprechenden Stellen gebildet werden, indem diese derart beaufschlagt werden, daß der durch den Feinstanzvorgang teilweise freigeschnittene und verdrängte, bolzenförmige Materialstopfen (26) zur einen Hälfte mit Preßsitz in dem Kupplungsring (8) verbleibt und zur anderen Hälfte an dessen Rückseite vorsteht.

## Beschreibung

Die Erfindung bezieht sich auf eine drehfeste Verbindung eines Kupplungsringes einer Synchronisiereinheit mit einem Zahnrad der im Oberbegriff des Patentanspruchs 1 erwähnten Art.

Aus der EP 0 508 976 B1 ist eine Synchronisiereinheit bekannt, bei der ein Kupplungsring an einem Zahnrad über einen Absatz zentriert aufgenommen ist und am Umfang verteilt angeordnete Ausnehmungen aufweist.

Bei dieser bekannten Synchronisiereinheit erfolgt die Verbindung des Kupplungsringes auf dem Absatz des Zahnrades in drehfester, form- und kraftschlüssiger Weise (z.B. durch Verzahnung oder Laserschweißung). (Siehe Spalte 4 der Schrift die Zeilen 10-13 und 33-48.)

Die am Umfang verteilten Ausnehmungen im Kupplungsring sind vorgesehen, um Mitnahmenocken eines Reibringkörpers einer Doppelsynchronisierung aufzunehmen und können durch eine Feinschneidoperation hergestellt werden.

Die Aufgabe der Erfindung ist es bei einer Synchronisiereinrichtung der bekannten Art, die erforderliche drehfeste Verbindung zwischen dem Kupplungsring und dem Zahnrad in besonders kostengünstiger und zweckmäßiger Weise formschlüssig zu gestalten.

Gemäß der Erfindung wird diese Aufgabe gelöst, indem bei einer Synchronisiereinheit gemäß dem Oberbegriff des Patentanspruchs 1, die im Kennzeichenteil des Patentanspruchs 1 aufgezeigten Merkmale angewendet werden.

Dadurch, daß das Zahnrad mit in der Anlagefläche des Kupplungsringes am Umfang verteilten Bohrungen oder Ausnehmungen versehen ist, und der Kupplungsring durch einen Feinstanzvorgang an den, der Lage der Bohrungen oder Ausnehmungen entsprechenden Stellen derart beaufschlagt wird, daß das durch den Feinstanzvorgang freigeschnittene und verdrängte bolzenförmige Material zur Hälfte mit Preßsitz im Kupplungsring verbleibt und mit der anderen Hälfte auf der Rückseite des Kupplungsringes vorsteht, wird nach den weiteren, üblichen Bearbeitungsvorgängen, wie Herstellen der Anspitzungen und Hinterlegungen, an der Verzahnung des Kupplungsringes eine sichere, formschlüssige Verankerung des Kupplungsringes am Zahnrad bereitgestellt, wobei gleichzeitig die zum drehschlüssigen Mitnehmen eines Reibringkörpers erforderlichen Ausnehmungen mit bereitgestellt werden.

Im Unterschied zu der bisher eingesetzten Feinschneidoperation der Innen/Außenkontur und der auf dem Umfang verteilten Ausnehmungen für die Mitnehmernocken des Reibringes werden die Ausnehmungen erfindungsgemäß nur soweit durchgestanzt, daß das durch den Feinschneidvorgang geschnittene und verdrängte bolzenförmige Material zur Hälfte mit Preßsitz im Kupplungsring verbleibt und die andere Hälfte auf der Rückseite des Kupplungsringes vorsteht, so daß beim Fügen des mit Vertiefungen in der Form der bolzenförmigen Butren des Kupplungsringes in der Anlagefläche zum Kupplungsring versehene Zahnrad durch Eingreifen der bolzenförmigen Butren des Kupplungsringes in die Vertiefungen des Zahnrades eine formschlüssige Verbindung entsteht. Die Mitnehmernocken eines Reibringes können in die teilweisen Ausnehmungen des Kupplungsringes eingreifen.

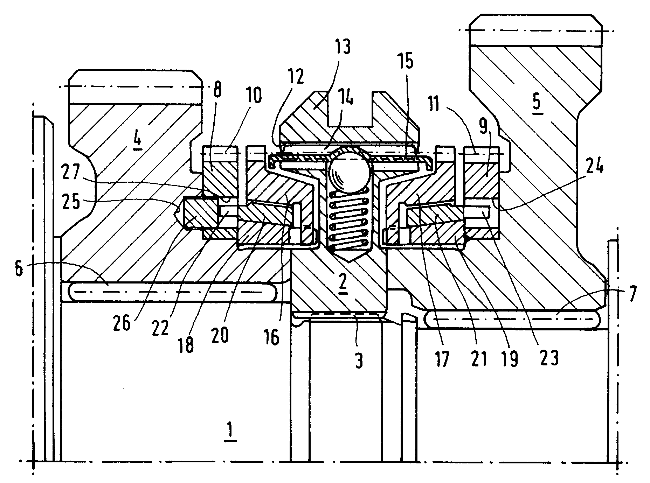

Die Erfindung wird anhand eines in der Zeichnung gezeigten Ausführungsbeispieles näher erläutert, es zeigt:
Die Figur einen vertikalen Teilschnitt durch eine Synchronisiereinheit mit einer an sich bekannten Doppelsynchronisierung, wobei in der linken Figurenhälfte die erfindungsgemäße Befestigung für den Kupplungsring am Zahnrad und in der rechten Figurenhälfte der bekannte Stand der Technik dargestellt ist.

In der Figur ist auf einer Getriebewelle 1 eine an sich bekannte Synchronnabe 2 in üblicher Weise über eine Kerbverzahnung 3 drehfest angeordnet.

Zu beiden Seiten der Synchronnabe 2 sind Zahnräder 4 und 5 über Nadellager 6 und 7 lose laufend auf der Getriebewelle 1 gelagert.

Mit jedem Zahnrad 4 und 5 ist ein Kupplungsring 8 und 9 verbunden, der außen eine Kupplungsverzahnung 10 und 11 aufweist, die in bekannter Weise mit einer Innenverzahnung 12 einer Schiebehülse 13 zusammenwirkt, um das Zahnrad 4 oder 5 des jeweils ausgewählten Ganges drehfest mit der Getriebewelle 1 zu verbinden.

Die Schiebemuffe 13 steht in Eingriff mit einer Außenverzahnung 14 an der Synchronnabe 2 und wirkt über Synchronriegel 15 auf äußere Synchronringe 16 und 17 ein, die in drehfester Verbindung mit inneren Synchronringen 18 und 19 stehen und auf zwischen den äußeren und inneren Synchronringen angeordneten Reibringkörpern 20 und 21 einwirken, die über Mitnehmer 22 und 23 drehfest und formschlüssig mit dem Kupplungsring 8 bzw. 9 und dem jeweiligen Zahnrad 4 oder 5 verbunden sind.

In der rechten Seite der Figur ist die herkömmliche Art einer Befestigung des Kupplungsringes 9 am Zahnrad 5 gezeigt, bei der dieser z.B. durch Laserschweißen mit dem Zahnrad 5 verbunden ist. Der Kupplungsring ist mit Ausnehmungen 24 versehen, um die Mitnehmer 23 aufzunehmen.

Aus der linken Seite der Figur ist die erfindungsgemäße Befestigung des Kupplungsringes 8 am Zahnrad 4 ersichtlich. Das Zahnrad 4 ist hierfür mit einer Anzahl von am Umfang verteilten Bohrungen oder Ausnehmungen 25 versehen. Der auf den Absatz des Zahnrades aufsetzbare Kupplungsring 8 wird durch einen Feinstanzvorgang an den Stellen, die den am Zahnrad 4 angeordneten Bohrungen oder Ausnehmungen 25 entsprechen, derart beaufschlagt, daß der durch den Feinstanzvorgang abgetrennte und verdrängte, bolzenförmige Materialstopfen 26 zur einen Hälfte mit Preßsitz im Kupplungsring verbleibt und mit der anderen Hälfte auf der Rückseite des Kupplungsringes vorsteht. Dabei werden durch diesen Feinstanzvorgang auf der nicht anliegenden Seite des Kupplungsringes 8 Ausnehmungen 27 ausgebildet, die in naheliegender Weise zur Aufnahme der Mitnehmer 22 des Reibringkörpers 20 herangezogen werden können.

Nach Durchführung der weiteren, üblichen Bearbeitungsvorgänge, wie Herstellen der Anspitzungen und Hinterlegungen an der Verzahnung am Kupplungsring mit anschließendem Härten und evtl. Schleifen der Innenbohrung, wird der Kupplungsring z.B. mit einem Preßsitz auf den Absatz des Zahnrades aufgeschoben und über die in die Ausnehmungen 25 des Zahnrades 4 einragenden Materialstopfen 26 eine drehfeste, formschlüssige Verbindung hergestellt.

## Patentansprüche

1. Drehfeste Verbindung eines Kupplungsringes einer Synchronisiereinheit mit einem Zahnrad, wobei der Kupplungsring (8) auf einem Absatz des Zahnrades (4) zentriert aufgenommen ist und mit einer Vielzahl von am Umfang verteilten Ausnehmungen versehen ist,
**dadurch gekennzeichnet**, daß
- das Zahnrad (4) an der Anlagefläche für den Kupplungsring (8) mit einer Anzahl von am Umfang verteilten Bohrungen oder Ausnehmungen (25) versehen ist und
- der Kupplungsring (8) durch einen Feinstanzvorgang an den, den Bohrungen oder Ausnehmungen (25) entsprechenden Stellen derart beaufschlagt wird, daß der durch den Feinstanzvorgang freigeschnittene und verdrängte, bolzenförmige Materialstopfen (26) zur einen Hälfte mit Preßsitz im Kupplungsring (8) verbleibt und zur anderen Hälfte an dessen Rückseite vorsteht.
